# EUROPÄISCHE PATENTSCHRIFT

(11) **EP 2 343 857 B1**
(45) Veröffentlichungstag und Bekanntmachung des Hinweises auf die Patenterteilung: **18.10.2017**
(21) Anmeldenummer: 10000124.7
(22) Anmeldetag: 08.01.2010
(51) Int. Cl.: H04L 12/753, H04L 12/42, H04L 12/46

(54) **Netzwerkknoten für ein Kommunikationsnetzwerk**
Network node for a communication network
Noeud de réseau pour un réseau de communication

(43) Veröffentlichungstag der Anmeldung: 13.07.2011
(73) Patentinhaber: Siemens Aktiengesellschaft, 80333 München (DE)
(72) Erfinder: Kulkarni, Vivek, 82008 Unterhaching (DE); Lohmeyer, Joachim, 91161 Hilpoltstein (DE); Scheffel, Matthias, 82008 Unterhaching (DE); Zirkler, Andreas Dr., 85635 Höhenkirchen (DE)

(56) Entgegenhaltungen:
- "IEEE Standards for Local and Metropolitan Area Networks--- Virtual Bridged Local Area Networks--- Amendment 3: Multiple Spanning Trees;IEEE Std 802.1s-2002 (Amendment to IEEE Std 802.1Q, 1998 Edition) ED - Anonymous" IEEE STANDARD; [IEEE STANDARD], IEEE, PISCATAWAY, NJ, USA, 1. Januar 2002 (2002-01-01), Seiten _1-211, XP017603570 ISBN: 978-0-7381-3495-6
- CISCO SYSTEMS ET AL: "Understanding Multiple Spanning Tree Protocol (802.1s)" INTERNET CITATION 14. Mai 2005 (2005-05-14), XP002426379 Gefunden im Internet: URL:http://web.archive.org/web/20050514065 955/www.cisco.com/warp/public/4 73/147.pdf [gefunden am 2007-03-23]
- KLEINEBERG O ET AL: "Automatic device configuration for Ethernet ring redundancy protocols" EMERGING TECHNOLOGIES&FACTORY AUTOMATION, 2009. ETFA 2009. IEEE CONFERENCE ON, IEEE, PISCATAWAY, NJ, USA, 22. September 2009 (2009-09-22), Seiten 1-8, XP031575608 ISBN: 978-1-4244-2727-7

## Beschreibung

Die folgende Erfindung betrifft einen Netzwerkknoten für ein Kommunikationsnetzwerk, wobei das Kommunikationsnetzwerk ein erstes Teilnetz und ein mit dem ersten Teilnetz verbundenes zweites Teilnetz umfasst, wobei das erste Teilnetz ein Spannbaum-Protokoll verwendet und das zweite Teilnetz ein sich vom Protokoll des ersten Teilnetzes unterscheidendes zweites Protokoll verwendet, und wobei der Netzwerkknoten als ein Element für das zweite Teilnetz eingerichtet und zur Kommunikation innerhalb des zweiten Teilnetzes ausgebildet ist.

Derartige Netzwerkknoten sind aus dem Stand der Technik bekannt. So offenbart beispielsweise die Veröffentlichungsschrift WO 2008/119626 A2 Netzwerkknoten für ein Industrie-LAN ("Local Area Network"), welches als Ring ausgestaltet ist. Dieses Industrie-LAN ist mit einem Office-LAN verbunden, welches als komplexes, vermaschtes Netzwerk ausgestaltet ist und auf welchem ein so genanntes RSTP-Protokoll gemäß der Norm IEEE 802.1w installiert ist. Mit Hilfe dieses RSTP-Protokolls gelingt es, trotz vieler redundanter Pfade im Office-LAN, Kommunikationsschleifen innerhalb dieses Netzes zu vermeiden. Über dieses Protokoll können auch nach Störungen, wie zum Beispiel dem Ausfall von Leitungen, Ports und/oder Netzknoten die entsprechenden Kommunikationswege angepasst werden. Die Norm 802.1s befasst sich mit dem "Multiple Spanning Tree Protocol" (MSTP). Beim MSTP handelt es sich um eine Strukturierung eines mit einem Spannbaum-Protokoll operierenden Netzes, wobei dieses Netz in virtuelle Subnetze unterteilt wird. Es ist ein Problem des Standes der Technik, dass bei der Verknüpfung eines solchen Office-LAN, welches das RSTP-Protokoll verwendet, mit einem Industrie-LAN, auf welchem beispielsweise ein Industrie taugliches, Echtzeit fähiges Protokoll installiert ist, Probleme auftreten, wenn eine solche Rekonfiguration mittels RSTP-Protokoll auftritt. Hierbei kann es zu Problemen bei der Zusammenarbeit des RSTP-Protokolls und des Protokolls im Industrie-LAN kommen, was z.B. die Kommunikation im Industrie-LAN verzögern oder ganz unterbrechen kann.

Daher ist es eine Aufgabe der vorliegenden Erfindung, die Kommunikation und/oder Rekonfiguration innerhalb eines aus verschiedenen Teilnetzen zusammengesetzten Kommunikationsnetzwerks, welches sich z.B. aus einem Office-LAN und einem Industrie-LAN zusammensetzt, zu verbessern.

Diese Aufgabe wird gelöst von einem Netzwerkknoten für ein Kommunikationsnetzwerk,
- wobei das Kommunikationsnetzwerk ein erstes Teilnetz und ein mit dem ersten Teilnetz verbundenes zweites Teilnetz umfasst,
- wobei das erste Teilnetz ein Spannbaum-Protokoll verwendet und das zweite Teilnetz ein sich vom Protokoll des ersten Teilnetzes unterscheidendes zweites Protokoll verwendet, und
- wobei der Netzwerkknoten als ein Element für das zweite Teilnetz eingerichtet und zur Kommunikation innerhalb des zweiten Teilnetzes ausgebildet ist,
- wobei der Netzwerkknoten weiterhin vermittels einer Spannbaum-Funktionalität derart als ein Spannbaum-Hauptknoten zur Kontrolle und Steuerung des zweiten Teilnetzes ausgebildet und eingerichtet ist, dass das zweite Teilnetz vom Spannbaum-Protokoll des ersten Teilnetzes als ein virtueller Netzknoten behandelt wird oder behandelbar ist.

Dadurch, dass das zweite Teilnetz als ein virtueller Netzknoten für das Spannbaum-Protokoll des ersten Teilnetzes behandelt wird, wird die Kommunikation im ersten Teilnetz durch die Kommunikation innerhalb des zweiten Teilnetzes weniger oder sogar garnicht beeinflusst, da das zweite Teilnetz für das erste Teilnetz als einzelner Knoten gesehen wird. Die Wechselwirkungen zwischen den Protokollen des ersten und zweiten Teilnetzes werden durch die Spannbaum-Funktionalität des Spannbaum-Hauptknotens im zweiten Teilnetz so kontrolliert und gemanagt, dass die gegenseitigen Störungen der unterschiedlichen Protokolle in beiden Teilnetzen reduziert werden. Auch eine Rekonfiguration im ersten Teilnetz wird auf diese Weise erleichtert, da der Aufbau des zweiten Teilnetzes für das erste Teilnetz keine beziehungsweise eine geringere Rolle spielt.

Das Kommunikationsnetzwerk kann dabei als ein drahtgebundenes Kommunikationsnetzwerk als auch ein über eine Luftschnittstelle kommunizierendes Netzwerk sein oder auch eine Kombination aus drahtgebundenem und Luftschnittstellen-Netzwerk. Weiterhin kann das Kommunikationsnetzwerk oder auch Teile des Kommunikationsnetzwerks gemäß dem Ethernet, Profinet, Profibus, WLAN oder ähnlichen Standards ausgebildet sein. Bei dem Kommunikationsnetzwerk oder Teilen davon kann es sich beispielsweise um ein "Local Area Network (LAN)", ein "Wide Area Network WAN)", ein "Wireless Local Area Network (WLAN)" oder Ähnliches bzw. Kombinationen davon handeln.

Das erste Teilnetz kann mit dem zweiten Teilnetz über ein oder mehrere Netzwerkverbindungen verbunden sein.

Weiterhin kann das zweite Teilnetz vom ersten Teilnetz verschieden sein, was bedeutet, dass beispielsweise jeder Netzknoten des Kommunikationsnetzwerks eindeutig einem der beiden Teilnetze zugehörig ist.

Als Spannbaum-Protokoll wird im Zusammenhang mit der vorliegenden Beschreibung allgemein ein Netzwerkprotokoll für ein Kommunikationsnetzwerk verstanden, mit welchem Transportschleifen bzw. -maschen in den Kommunikationswegen im Kommunikationsnetzwerk reduziert oder vermieden werden. Weiterhin kann ein Spannbaum-Protokoll im Sinne der vorliegenden Beschreibung auch ein Protokoll zur Vermeidung redundanter Transportwege in dem Kommunikationsnetzwerk sein.

Weiterhin kann ein Spannbaum-Protokoll im Sinne der vorliegenden Beschreibung auch ein Netzwerk-Protokoll zum Management redundanter Transportwege im Falle von Transportfehlern (z. B. eine Unterbrechung einer Leitung oder ein Ausfall eines Netzwerk-Knotens) im Kommunikationsnetzwerk sein. Ein Spannbaum-Protokoll kann auch als eine Kombination von mehreren der vorstehend genannten Definitionen beschrieben werden.

Beispiele für ein Spannbaum-Protokoll sind beispielsweise ein "Spanning Tree Protocol" (STP), wie z. B. im Standard IEEE 802.1d definiert ist, ein "Rapid Spanning Tree Protocol" (RSTP), wie z. B. im Standard IEEE 802.1w definiert ist, oder auch ein "Multiple Spanning Tree Protocol" (MSTP), wie es beispielsweise im Standard IEEE 802.1s definiert ist. Auch alle Weiterentwicklungen dieser Protokolle oder alle vergleichbaren Protokolle sind ebenfalls Beispiele für Spannbaum-Protokolle im Sinne der vorliegenden Anmeldung.

Dass in einem bestimmten Kommunikationsnetz oder Teilnetz ein bestimmtes Protokoll verwendet wird, bedeutet nicht, dass nicht auch noch weitere Protokolle in Netzknoten der jeweiligen Netze implementiert sein können und/oder von den Netzknoten und in den jeweiligen Netzwerken zusätzlich verwendet werden. So kann auf einem Knoten des zweiten Teilnetzes beispielsweise das zweite Protokoll und zugleich auch das Spannbaum-Protokoll oder Teile davon implementiert sein. Auch Protokollnachrichten gemäß dem Spannbaum-Protokoll können z.B. im zweiten Teilnetz gesendet, empfangen und/oder weitergeleitet werden. Insbesondere der Spannbaum-Hauptknoten, und/oder die nachfolgend noch näher erläuterten Spannbaum-Nebenknoten oder Spannbaum-Reserve-Hauptknoten können z.B. derart ausgestaltet sein.

Das zweite Protokoll des zweiten Teilnetzes unterscheidet sich vom Spannbaum-Protokoll des ersten Teilnetzes. Dabei kann das zweite Protokoll beispielsweise eine kürzere typische Rekonfigurationszeit bei Änderungen im Netzwerk aufweisen, als das erste Teilnetz. Bei einem auf diese Weise ausgestalteten Netzwerkknoten für das zweite Teilnetz hat die Erfindung den weiteren Vorteil, dass trotz einer vergleichsweise langen Rekonfigurationszeit im ersten Teilnetz durch das Spannbaum-Protokoll die relativ kurze Rekonfigurationszeit im zweiten Teilnetz erhalten bleiben kann.

Weiter können das erste und zweite Teilnetz beispielsweise ein echtzeitfähiges oder auch ein nicht-echtzeitfähiges Protokoll verwenden.

In einer vorteilhaften Ausgestaltung der Erfindung wird im zweiten Teilnetz als zweites Protokoll ein echtzeitfähiges Protokoll verwendet. Weiterhin kann das Spannbaum-Protokoll des ersten Teilnetzes in diesem Fall nicht echtzeitfähig sein. Die Erfindung bietet in diesem Fall eines echtzeitfähigen zweiten Teilnetzes den Vorteil, dass die Echtzeitfähigkeit des zweiten Protokolls durch eine Rekonfiguration im Spannbaum-Protokoll nicht oder nur relativ gering beeinträchtigt wird. Ein Grund dafür ist, dass das Management des Spannbaum-Protokolls im zweiten Teilnetz zu einem relativ großen Teil von dem Spannbaum-Hauptknoten übernommen wird und so andere Elemente des zweiten Teilnetzes von derartigen Aufgaben entlastet werden. Daher sind die meisten Elemente des zweiten Teilnetzes nicht oder nur zu einem geringen Teil in diese Rekonfiguration involviert und betroffen.

Als Netzknoten wird innerhalb der vorliegenden Beschreibung ein zur Vermittlung und/oder Weiterleitung von Daten im Kommunikationsnetzwerk geeignetes Element bezeichnet. Beispiele für Netzknoten können so genannte Brücken (Fachterminus: "Bridges") und/oder so genannte Schalter "Fachterminus: "Switches") und/oder andere vergleichbare zur Vermittlung von Informationen im Kommunikationsnetzwerk geeignete Netzknoten sein. Typischerweise besteht ein Kommunikationsnetzwerk oder auch ein Teilnetz aus mindestens zwei zumindest teilweise miteinander verbundenen Netzwerkknoten.

Im Zusammenhang mit der vorliegenden Beschreibung wird der Terminus "Netzwerkknoten" und der Terminus: "Netzknoten" synonym behandelt. Gleiches gilt für die Begriffe "Kommunikationsnetz" und "Kommunikationsnetzwerk".

In einer weiteren Ausgestaltung der Erfindung kann vorgesehen sein, dass das zweite Teilnetz vom Spannbaum-Protokoll des ersten Teilnetzes als genau ein virtueller Netzknoten behandelt wird oder behandelbar ist. In diesem Fall ergibt sich ein besonders einfaches Handling des zweiten Teilnetzes durch das Spannbaum-Protokoll des ersten Teilnetzes.

In der vorliegenden Beschreibung wird das Kürzel STP für ein "Spanning Tree Protocol" gemäß dem Standard IEEE 802.1d oder einem vergleichbaren Standard verstanden. Das Kürzel RSTP wird als ein "Rapid Spanning Tree Protocol" gemäß dem Standard IEEE 802.1w oder einem vergleichbaren Standard verstanden und das Kürzel MSTP als "Multiple Spanning Tree Protocol" gemäß dem Standard IEEE 802.1s oder einem vergleichbaren Standard.

In einer bevorzugten Ausführungsform kann das Spannbaum-Protokoll beispielsweise als STP-Protokoll ausgebildet sein und die Spannbaum-Funktionalität eine STP-Funktionalität umfassen. Dabei umfasst die STP-Funktionalität entsprechende Funktionseinheiten zur Ausführung des STP-Protokolls. Weiterhin kann das Spannbaum-Protokoll auch als RSTP-Protokoll ausgebildet sein, wobei die Spannbaum-Funktionalität dann eine RSTP-Funktionalität umfassen kann. Die RSTP-Funktionalität umfasst dabei die Funktionalität zur Durchführung von Funktionsschritten, die durch das RSTP-Protokoll im Netzwerkknoten veranlasst sind. Weiterhin kann das Spannbaum-Protokoll auch als MSTP-Protokoll ausgebildet sein und die Spannbaum-Funktionalität eine MSTP-Funktionalität umfassen. Auch die MSTP-Funktionalität umfasst dabei die Funktionalität zur Umsetzung von Anforderungen des MSTP-Protokolls in Netzwerkknoten.

Weiterhin können Spannbaum-Protokoll und Spannbaum-Funktionalität auch eine Kombination der vorgenannten Protokolle umfassen.

Diese Ausgestaltung der vorliegenden Erfindung ermöglicht es, dass beispielsweise ein STP-, RSTP- und/oder MSTP-Netz mit einem weiteren Netzwerk, beispielsweise einem echtzeitfähigen Netz, gekoppelt werden kann, ohne dass die komplexen Netzsteuerungs- und Rekonfigurations-Vorkehrungen in den genannten STP-, RSTP- und/oder MSTP-Netzen die Arbeitsweise des angehängten zweiten Teilnetzes zu sehr oder auch überhaupt beeinflussen.

Weiterhin kann vorgesehen sein, dass das zweite Teilnetz eine Linienstruktur und/oder eine Ringstruktur aufweist. Dabei wird unter einer Linienstruktur beispielsweise eine Netzstruktur verstanden, in welcher die Netzknoten des zweiten Teilnetzes logisch zu einer linearen Kette verbunden sind. Eine Ringstruktur kann beispielsweise eine Struktur eines zweiten Teilnetzes sein, bei welcher die Netzknoten des zweiten Teilnetzes logisch zu einem Ring verbunden sind. In solchen Linien - oder Ringnetzen lassen sich besonders schnelle Rekonfigurationszeiten erreichen oder auch besonders gut echtzeitfähige Protokolle realisieren. Bei dieser Ausgestaltung der Erfindung bietet ein erfindungsgemäßer Netzknoten den Vorteil, dass ein solches "schnelles" zweites Teilnetz durch das Spannbaum-Protokoll des ersten Teilnetzes weniger oder auch gar nicht behindert bzw. belastet wird.

Das zweite Teilnetz kann beispielsweise ein echtzeitfähiges Protokoll verwenden. Weiterhin kann das zweite Teilnetz beispielsweise ein Hyper-Ring-, ein HSR-, ein Turbo-Ring-, ein REP- und/oder ein MRP-Protokoll verwenden. Dabei sind die genannten Protokolle Beispiele für industrietaugliche Kommunikations-Protokolle, die auch eine Kombination im Rahmen industrieller Aufgaben, beispielsweise industrieller Steuerungs- und Regelungsaufgaben, relativ kurze Rekonfigurationszeiten bei hoher Netzsicherheit und/oder -stabilität ermöglichen.

Im Rahmen der vorliegenden Beschreibung wird unter einem echtzeitfähigen Kommunikations-Protokoll bzw. einem echtzeitfähigen Protokoll ein solches Protokoll verstanden, innerhalb welchem eine definierte Reaktionszeit auf bestimmte Ereignisse im Kommunikationsnetz sichergestellt ist. Solche echtzeitfähigen Protokolle können beispielsweise gemäß einem Industrial-Ethernet-Standard, einem Profinet-Standard und/oder einem Profibus-Standard ausgebildet sein.

Das zweite Teilnetz kann mindestens eine externe Schnittstelle aufweisen, wobei externe Schnittstellen des zweiten Teilnetzes solche Schnittstellen von Netzknoten des zweiten Teilnetzes sind, die nicht mit einem Netzknoten des zweiten Teilnetzes verbunden sind. Typischerweise können solche externen Schnittstellen beispielsweise mit dem ersten Teilnetz und/oder mit weiteren Kommunikationsnetzen und/oder auch mit Kommunikations-Endgeräten (z. B. Computer, Steuerungsgeräte, Modems, Telefone, Sensoren, Aktoren ...) verbunden oder verbindbar sein.

Die Spannbaum-Funktionalität des Spannbaum-Hauptknotens kann beispielsweise die Erfassung von externen Schnittstellen des zweiten Teilnetzes umfassen. Diese Funktionalität kann beispielsweise die Fähigkeit umfassen, eine Anfrage-Nachricht an Netzknoten des zweiten Teilnetzes zu senden, mit der Aufforderung an die jeweiligen Netzknoten, eine Informations-Nachricht über die externen Schnittstellen des jeweiligen Netzknotens an den Spannbaum-Hauptknoten zurückzusenden. Weiterhin kann diese Funktionalität die Fähigkeit umfassen, Informationsnachrichten von einzelnen Netzknoten des zweiten Teilnetzes über an diesen Netzknoten vorhandene externe Schnittstellen zu empfangen und umzusetzen.

Weiterhin kann die Spannbaum-Funktionalität des Spannbaum-Hauptknotens die Funktionalität zur Vergabe von Schnittstellen-Identifikationsdaten (z. B. so genannte "Port-IDs"), insbesondere eindeutiger Schnittstellen-Informationsdaten, für externe Schnittstellen des zweiten Teilnetzes umfassen. Auf diese Weise kann der Spannbaum-Hauptknoten beispielsweise jeder externen Schnittstelle im zweiten Teilnetz eine eindeutige Identifikations-Nummer oder eine eindeutige Identifikations-Information zuordnen, so dass jede externe Schnittstelle im zweiten Teilnetz eindeutig identifizierbar ist.

Die Spannbaum-Funktionalität des Spannbaum-Hauptknotens kann auch die Übermittlung von Schnittstellen-Identifikationsdaten an andere bzw. die anderen Netzknoten des zweiten Teilnetzes umfassen. Auf diese Weise kann der Spannbaum-Hauptknoten die anderen bzw. andere Netzwerkknoten des zweiten Teilnetzes über die Identifikationsdaten bzw. Schnittstellen-IDs von deren externen Schnittstellen informieren.

Weiterhin kann die Spannbaum-Funktionalität des Spannbaum-Hauptknotens auch die Berechnung von Schnittstellen- Zuständen von externen Schnittstellen des zweiten Teilnetzes umfassen. Solche Schnittstellenzustände, z.B. "Port States" genannt, können beispielsweise sein, dass die entsprechende Schnittstelle (z. B. der entsprechende externe Port) für die Informationsweiterleitung blockiert ist, für eine Informationsweiterleitung geöffnet ist und entsprechende eingehende Nachrichten weiterleitet, dass die entsprechende Schnittstelle nur Nachrichten empfängt, ohne diese weiterzuleiten oder ähnliche vergleichbare Zustände sein. Beispielsweise können Schnittstellen-Zustände die Zustände "Disabled", "Blocking", "Listening", "Learning", "Forwarding", "Discarding", gemäß dem STP- oder RSTP-Standard sein.

Typischerweise können in Spannbaum-Protokoll-Netzen solche Schnittstellen-Zustände von jedem Netzknoten für die jeweils eigenen Schnittstellen berechnet werden. Dies bedeutet einen relativ hohen Aufwand innerhalb jedes Netzknotens, wenn sich im Spannbaum-Netz Änderungen ergeben (z. B. durch eine Netz-Umkonfiguration, neue Netzknoten oder entsprechende Leitungsausfälle bzw. Störungen). Die vorliegende Erfindung hat der vorgenannten Ausgestaltung beispielsweise den Vorteil, dass diese Berechnung von Schnittstellenzuständen innerhalb des Spannbaum-Hauptknotens im zweiten Teilnetzwerk für mehrere oder auch alle externen Schnittstellen des zweiten Teilnetzes vorgenommen werden können und so die anderen Netzknoten des zweiten Teilnetzes von mit dem Spannbaum-Protokoll des ersten Teilnetzes zusammenhängenden Tätigkeit zu entlasten.

In diesem Zusammenhang kann die Spannbaum-Funktionalität des Spannbaum-Hauptknotens auch die Fähigkeit zur Übertragung von Schnittstellen-Zuständen, beispielsweise von vom Spannbaum-Hauptknoten berechneten Schnittstellen-Zuständen, an andere Netzknoten andere Netzknoten des zweiten Teilnetzes umfassen. Auf diese Weise können die jeweiligen Netzknoten die entsprechend festgelegten oder ermittelten Schnittstellen-Zustände für ihre entsprechenden Schnittstellen umsetzen.

Die Spannbaum-Funktionalität des Spannbaum-Hauptknotens kann weiterhin den Empfang von einer dem Spannbaum-Protokoll zugeordneten Protokolldaten-Nachricht umfassen. Diese Nachrichten können z. B. von einem weiteren Netzwerkknoten des zweiten Teilnetzes kommen und/oder das Ermitteln einer Reaktion auf die oder eine empfangene Protokolldaten-Nachricht auslösen und/oder das Übermitteln einer Antwort-Protokolldaten-Nachricht auf Reaktion auf die oder eine empfangene Protokolldaten-Nachricht z. B. an den weiteren Netzknoten des zweiten Teilnetzes auslösen.

Solche Protokolldaten-Nachrichten können Nachrichten im Rahmen des Spannbaum-Protokolls sein, mit welchen das zugrundeliegende Kommunikationsnetzwerk organisiert wird. Beispielsweise können solche Protokolldaten-Nachrichten Informationen über einen zentralen Netzknoten des entsprechenden Netzwerkes (z.B. eine sogenannte "Root-Bridge" oder einen analogen Netzknoten) oder auch entsprechende Abfrage-Nachrichten zur Abfrage von Informationen von einzelnen Netzknoten sein. Solche Protokolldaten-Nachrichten können z.B. die bei einem STP-, RSTP- und/oder MSTP-Protokoll definierten, so genannten "Bridge-Protocol Data Units" (auch Bridge PDUs) sein. Auf diese Weise kann der Spannbaum-Hauptknoten beispielsweise eine bei einem weiteren Netzknoten des zweiten Teilnetzes eingehende Protokolldaten-Nachricht von diesem weitergeleitet bekommen.

Des Weiteren kann der Spannbaum-Hauptknoten auf eine solche Protokolldaten-Nachricht hin eine mögliche Reaktion des ursprünglich empfangenden Netzwerkknotens ermitteln und diesem Netzwerkknoten diese Reaktion dann weiterleiten. Dabei kann eine solche Reaktion beispielsweise die Anweisung an diesen weiteren Netzwerkknoten des zweiten Teilnetzes sein, eine bestimmte weitere Protokolldaten-Nachricht auszusenden oder auch dem weiteren Netzwerkknoten diese Nachricht direkt zu übermitteln und ihn anzuweisen, diese an entsprechende Teilnehmer oder ein entsprechendes Netz weiterzuleiten. Auch hier ergibt sich der Vorteil, dass der Spannbaum-Hauptknoten weitere Knoten des zweiten Teilnetzes oder die anderen Netzwerkknoten des zweiten Teilnetzes von vom Spannbaum-Protokoll des mit dem zweiten Teilnetz verbundenen ersten Teilnetzes herrührenden Aufgaben entlasten kann. Dadurch wird die Kommunikation innerhalb des zweiten Teilnetzes vom Spannbaum-Protokoll des ersten Teilnetzes weniger beeinträchtigt oder nicht beeinträchtigt.

Die Spannbaum-Funktionalität des Spannbaum-Hauptknotens kann auch die Funktionalität umfassen, dass der Spannbaum-Hauptknoten als ein Zentralknoten für das erste Teilnetz derart fungiert, dass das zweite Teilnetz durch die Spannbaum-Funktionalität des Spannbaum-Hauptknotens vom Spannbaum-Protokoll des ersten Teilnetzes als Zentralknoten für das erste Teilnetz behandelt wird oder behandelbar ist. Als Zentralknoten im Rahmen eines Spannbaum-Protokolls wird ein Netzknoten bezeichnet, welcher die zentrale Konfiguration und Steuerung des vom Spannbaum-Protokoll betroffenen Kommunikationsnetzes in Bezug auf das Spannbaum-Protokoll steuert. Beispiel für einen solchen Zentralknoten im Rahmen eines STP-, RSTP- und/oder MSTP-Netzes ist die so genannte "Root-Bridge", die im Rahmen der entsprechenden Protokolle definiert ist. Auf diese Weise kann beispielsweise das gesamte zweite Teilnetz vom ersten Teilnetz als ein Zentralknoten für das vom Spannbaum-Protokoll betroffene Kommunikationsnetz fungieren.

Die vorstehend genannte Aufgabe wird auch gelöst von einem Netzwerkknoten für ein Kommunikationsnetzwerk,
- wobei das Kommunikationsnetzwerk ein erstes Teilnetz und ein mit dem ersten Teilnetz verbundenes zweites Teilnetz umfasst,
- wobei das erste Teilnetz ein Spannbaum-Protokoll verwendet und das zweite Teilnetz ein sich vom Spannbaum-Protokoll des ersten Teilnetzes unterscheidendes zweites Protokoll verwendet,
- wobei der Netzwerkknoten als ein Element für das zweite Teilnetz eingerichtet und zur Kommunikation innerhalb des zweiten Teilnetzes ausgebildet ist, wobei weiterhin das zweite Teilnetz einen Spannbaum-Hauptknoten gemäß der vorliegenden Beschreibung umfasst und wobei der Netzwerkknoten als ein Spannbaum-Reserve-Hauptknoten ausgebildet und eingerichtet ist, welcher die Merkmale eines Spannbaum-Hauptknotens gemäß der vorliegenden Beschreibung aufweist, und
- wobei der Spannbaum-Reserve-Hauptknoten weiterhin derart ausgebildet und eingerichtet ist, dass die Spannbaum-Funktionalität des Spannbaum-Reserve-Hauptknotens in einem Normalzustand deaktiviert ist, wobei in dem Normalzustand der Spannbaum-Hauptknoten seine Spannbaum-Funktionalität wahrnimmt, und
- wobei die Spannbaum-Funktionalität des Spannbaum-Reserve-Hauptknotens in einem Fehler-Zustand aktiviert ist, wobei in dem Fehlerzustand der Spannbaum-Hauptknoten eine Funktionsstörung aufweist.

Dabei können das Kommunikationsnetzwerk, das erste Teilnetz, das zweite Teilnetz, das Spannbaum-Protokoll, das zweite Protokoll des zweiten Teilnetzes sowie die Ausgestaltungen des Spannbaum-Hauptknotens und der Spannbaum-Funktionaltität gemäß der vorliegenden Beschreibung eingerichtet und ausgestaltet sein.

In dem Normalzustand kann der Spannbaum-Hauptknoten beispielsweise voll funktionsfähig sein oder auch in für seine Kommunikationsaufgabe genügender Weise funktionsfähig sein.

In dem Fehler-Zustand kann der Spannbaum-Hauptknoten im zweiten Teilnetz beispielsweise seine Kommunikationsaufgaben nicht mehr vollständig erfüllen. Eine Funktionsstörung des Spannbaum-Hauptknotens kann beispielsweise ein Ausfall des Knotens, eine Störung der Spannbaum-Funktionalität des Knotens und/oder sonstige interne Fehler, Schnittstellen-Fehler oder auch andere Hardware-Fehler sowie ein Abschalten oder Stromausfall sein.

Die Deaktivierung der Spannbaum-Funktionalität im Normalzustand kann beispielsweise bedeuten, dass die einem Spannbaum-Hauptknoten zugeordnete Spannbaum-Funktionalität des Spannbaum-Reserve-Hauptknotens im Normalzustand im Spannbaum-Reserve-Hauptknoten nicht aktiv ist. Das kann beispielsweise bedeuten, dass der Spannbaum-Reserve-Hauptknoten in dem Normalzustand nicht als Spannbaum-Hauptknoten agiert und innerhalb der Kommunikation erkennbar ist.

Das Aktivieren der Spannbaum-Funktionalität im Spannbaum-Reserve-Hauptknoten bedeutet, dass zumindest eine, vorzugsweise mehrere, weiter bevorzugt alle Funktionalitäten der Spannbaum-Funktionalität des Spannbaum-Hauptknotens im Spannbaum-Reserve-Hauptknoten aktiv sind.

Diese Ausgestaltung hat den Vorteil, dass das Management des Kommunikationsnetzwerks, das aus zumindest dem ersten und dem zweiten Teilnetz besteht, weiter vereinfacht wird, indem selbst bei einem Ausfall eines Spannbaum-Hauptknotens, welcher die Koordination des zweiten Teilnetzes innerhalb des Spannbaum-Protokolls des ersten Teilnetzes übernimmt, oder auch bei einer Funktionsstörung beziehungsweise einem Ausfall des Spannbaum-Hauptknotens die Funktionalität des zweiten Teilnetzes als ein virtueller Knoten für das Spannbaum-Protokoll weiter gewährleistet ist. Damit lässt sich beispielsweise die Funktionalität des zweiten Teilnetzes und auch dessen Integration in das Spannbaum-Protokoll des ersten Teilnetzes weiterhin aufrecht erhalten, auch wenn der Spannbaum-Hauptknoten im zweiten Teilnetz eine Funktionsstörung aufweist. Beispielsweise Rekonfigurationszeiten im zweiten Teilnetz oder auch eine Echtzeitfähigkeit darin werden also auch bei einer solchen Funktionsstörung nicht oder nicht erheblich beeinträchtigt.

Die Aktivierung der Spannbaum-Funktionalität des Spannbaum-Reserve-Hauptknotens kann beispielsweise selbsttätig erfolgen, z.B. wenn der Spannbaum-Reserve-Hauptknoten über einen bestimmten Zeitraum keine Nachrichten und/oder Signale vom Spannbaum-Hauptknoten mehr empfängt und so annehmen muss, dass dieser eine Funktionsstörung aufweist. Weiterhin kann die Aktivierung auch beispielsweise durch eine Nachricht erfolgen, z.B. vom Spannbaum-Hauptknoten selbst oder auch einem anderen Netzknoten im zweiten Teilnetz. Ein solcher Fall kann beispielsweise bei einem gezielten Abschalten des Spannbaum-Hauptknotens oder vergleichbaren Ereignissen auftreten. Eine solche Aktivierungsnachricht kann beispielsweise auch Teil eines Fehlerprotokolls innerhalb des Spannbaum-Hauptknotens sein, welcher bei einer Selbst-Detektion einer Funktionsstörung im Spannbaum-Hauptknoten ablaufen kann.

Weiterhin kann in dem Fall, in welchem im zweiten Teilnetz sowohl ein Spannbaum-Hauptknoten als auch ein Spannbaum-Reserve-Hauptknoten vorliegt, der Spannbaum-Hauptknoten zur Ausübung der Spannbaum-Funktionalität des Spannbaum-Reserve-Hauptknotens erforderliche Informationen an diesen übermitteln oder zur Übermittlung dieser Informationen ausgebildet sein. Weiterhin kann er zur Übermittlung dieser Informationen an den Spannbaum-Reserve-Hauptknoten gemäß einer vorgegebenen oder vorgebbaren Regeln ausgebildet sein oder solche Informationen gemäß einer vorgegebenen oder vorgebbaren Regel an diesen übermitteln.

Solche erforderlichen Informationen können beispielsweise die Informationen des Spannbaum-Hauptknotens sein, die der Spannbaum-Reserve-Hauptknoten benötigt, wenn er die Funktionalität des Spannbaum-Hauptknotens beim Auftreten eines Fehlers übernehmen muss. Dabei kann es sich beispielsweise um Identifikationsdaten des Spannbaum-Hauptknotens, Informationen zu den externen Schnittstellen, deren Identifikationsdaten, die Schnittstellen-Zustände von externen und/oder internen Schnittstellen und weitere vergleichbare Informationen handeln.

Die Übermittlung solcher Informationen gemäß einer vorgegebenen oder vorgebbaren Regel kann beispielsweise eine Übermittlung in regelmäßigen Zeitabständen sein. Weiterhin kann eine solche vorgebbare Regel die Übermittlung solcher Informationen auf Anfrage des Spannbaum-Reserve-Hauptknotens umfassen. Weiterhin kann die Regel auch umfassen, dass der Spannbaum-Hauptknoten entsprechende erforderliche Informationen dann an den Spannbaum-Reserve-Hauptknoten übermittelt, wenn sich an diesen Informationen eine Änderung ergeben hat.

Auf diese Weise ist der Spannbaum-Reserve-Hauptknoten mit den erforderlichen Informationen ausgestattet, um in einem Fehler-Fall die Spannbaum-Funktionalität des Spannbaum-Hauptknotens übernehmen zu können.

Die vorstehend genannte Aufgabe wird weiterhin gelöst von einem Netzwerkknoten für ein Kommunikationsnetzwerk, wobei das Kommunikationsnetzwerk ein erstes Teilnetz und ein mit dem ersten Teilnetz verbundenes zweites Teilnetz umfasst,
- wobei das erste Teilnetz ein Spannbaum-Protokoll verwendet und das zweite Teilnetz ein sich vom Spannbaum-Protokoll des ersten Teilnetzes unterscheidendes zweites Protokoll verwendet,
- wobei der Netzwerkknoten als ein Element für das zweite Teilnetz eingerichtet und zur Kommunikation innerhalb des zweiten Teilnetzes ausgebildet ist,
- wobei weiterhin das zweite Teilnetz einen Spannbaum-Hauptknoten gemäß der vorliegenden Beschreibung umfasst und
- wobei der Netzknoten derart als ein Spannbaum-Nebenknoten ausgebildet und eingerichtet ist, dass er eine Spannbaum-Unterstützungs-Funktionalität zur Unterstützung der Spannbaum-Funktionalität des Spannbaum-Hauptknotens aufweist.

Vermittels der Spannbaum-Unterstützungsfunktionaltiät unterstützt der Spannbaum-Nebenknoten also die Spannbaum-Funktionalität des Spannbaum-Hauptknotens.

Auf diese Weise ist es möglich, das Management des Kommunikationsnetzwerks zu vereinfachen, da mittels des Spannbaum-Nebenknotens in Zusammenhang mit einem Spannbaum-Hauptknoten das zweite Teilnetz innerhalb des Spannbaum-Protokolls des ersten Teilnetzes als quasi autarkes Subsystem agieren kann. Dabei kann der Spannbaum-Nebenknoten die Spannbaum-Funktionalität des Spannbaum-Hauptknotens derart unterstützen, dass in diesem Zusammenwirken das zweite Teilnetz vom Spannbaum-Protokoll des ersten Teilnetzes als ein, insbesondere genau ein virtueller Netzknoten behandelt wird oder behandelbar ist. Hierbei kann der Spannbaum-Hauptknoten dann beispielsweise die zentrale Management-Funktion des Spannbaum-Protokolls innerhalb des zweiten Teilnetzes übernehmen und der oder die Spannbaum-Nebenknoten den Spannbaum-Hauptknoten derart unterstützen, dass sie dem Hauptknoten entsprechende Informationen liefern oder entsprechende vom Hauptknoten kommende Informationen weiterleiten oder verarbeiten.

Beispielsweise kann auch ein Spannbaum-Reserve-Hauptknoten gemäß der vorliegenden Beschreibung so ausgebildet und eingerichtet sein, dass er im Normalzustand die Funktion eines Spannbaum-Nebenknotens wie in der vorliegenden Beschreibung erläutert, ausübt bzw. ausüben kann.

Die Spannbaum-Unterstützungs-Funktionalität kann beispielsweise eine STP-Funktionalität zur Unterstüzung eines STP-Protokolls umfassen. Weiterhin kann die Spannbaum-Unterstützungs-Funktionalität auch eine RSTP-Funktionalität zur Unterstützung eines RSTP-Protokolls umfassen. Die Spannbaum-Unterstützungs-Funktionalität kann auch eine MSTP-Funktionalität zur Unterstützung eines MSTP-Protokolls umfassen. Mit einer derartigen Ausgestaltung wird die Ankopplung des zweiten Teilnetzes an ein erstes Teilnetz mit einem STP-, RSTP- und/oder MSTP-Protokoll vereinfacht.

Das Kommunikationsnetzwerk, das erste Teilnetz, das zweite Teilnetz, das Spannbaum-Protokoll, die Netzwerkknoten, der Spannbaum-Hauptknoten sowie die Spannbaum-Funktionalität können weiterhin gemäß der vorliegenden Beschreibung ausgestaltet und eingerichtet sein.

Weiterhin kann der Spannbaum-Nebenknoten eine oder mehrere externe Schnittstellen aufweisen, die nicht mit einem Netzwerkknoten des zweiten Teilnetzes verbunden oder verbindbar sind. Dabei können die externen Schnittstellen beispielsweise, wie in der vorliegenden Beschreibung näher erläutert, ausgestaltet und eingerichtet sein.

Allgemein wird im Rahmen der vorliegenden Beschreibung unter dem Begriff "externe Schnittstelle" eine solche Schnittstelle eines Netzknotens verstanden, welche in der konkreten Ausgestaltung des Netzes nicht mit dem zweiten Teilnetz verbunden sind. Dafür muss die Schnittstelle nur die entsprechend notwendigen Eigenschaften aufweisen. Dass eine Schnittstelle zudem die Möglichkeit bietet, alternativ auch mit einem Netzwerkknoten des zweiten Teilnetzes verbunden zu werden, ändert die Tatsache nicht.

Die Spannbaum-Unterstützungs-Funktionalität des Spannbaum-Nebenknotens kann beispielsweise die Funktionalität zur Übermittlung von Schnittstellen-Informationen der externen Schnittstellen des Spannbaum-Nebenknotens an den Spannbaum-Hauptknoten umfassen. Dabei können die Schnittstellen-Informationen beispielsweise gemäß der vorliegenden Beschreibung ausgebildet oder eingerichtet sein. Dabei kann der Auslöser zum Versenden solcher Schnittstellen-Informationen beispielsweise eine Anfrage vom Spannbaum-Hauptknoten sein. Weiterhin kann der Spannbaum-Nebenknoten solche Schnittstellen-Informationen auch aus eigener Veranlassung versenden, beispielsweise in einem regelmäßigen Zeitabstand oder wenn sich entsprechende Schnittstellen-Informationen ändern oder geändert haben. Auf diese Weise kann der Spannbaum-Nebenknoten die Spannbaum-Funktionalität des Hauptknotens unterstützen, da dem Hauptknoten derartige Informationen helfen, um das zweite Teilnetz als einen virtuellen Netzknoten im Rahmen des Spannbaum-Protokolls des ersten Teilnetzes darzustellen und zu managen.

Weiterhin kann die Spannbaum-Unterstützungs-Funktionalität des Spannbaum-Nebenknotens die Funktionalität zur Kommunikation mit einem über die externe Schnittstelle des Spannbaum-Nebenknotens verbundenen externen Netzwerkknoten oder eines damit verbundenen externen Kommunikations-Endgeräts umfassen. Ein Kommunikations-Endgerät kann dabei jeder Sender und/oder Empfänger von Informationen über das Kommunikationsnetz sein und kann gemäß der vorliegenden Beschreibung ausgebildet und ausgestaltet sein. Weiterhin können Netzwerkknoten auch gemäß der vorliegenden Beschreibung ausgestaltet sein. Vorteilhafter Weise umfasst die Spannbaum-Unterstützungs-Funktionalität des Spannbaum-Nebenknotens auch die Funktionalität zur Übertragung von aus dem ersten Teilnetz kommenden Daten über eine seiner externen Schnittstellen sowie die Übertragung solcher Daten an einen Empfänger im ersten Teilnetz.

Weiterhin kann die Spannbaum-Unterstützungs-Funktionalität des Spannbaum-Nebeknotens die Funktionalität zum Empfang und der Verarbeitung von vom Spannbaum-Hauptknoten übermittelten Schnittstellen-Identifikationsdaten betreffend eine Schnittstelle, insbesondere eine externe Schnittstelle des Spannbaum-Nebenknotens, umfassen. Dabei können die Schnittstellen-Identifikationsdaten sowie der Spannbaum-Hauptknoten wiederum gemäß der vorliegenden Beschreibung ausgebildet sein. Auf diese Weise kann der Spannbaum-Nebenknoten die vom Spannbaum-Hauptknoten ermittelte Konfiguration des zweiten Teilnetzes in Bezug auf das Spannbaum-Protokoll des ersten Teilnetzes umsetzen.

Die Spannbaum-Unterstützungs-Funktionalität des Spannbaum-Nebenknotens kann auch die Funktionalität zum Empfang und der Verarbeitung von Schnittstellen-Zustands-Nachrichten vom Spannbaum-Hauptknoten bezüglich einer Schnittstelle, insbesondere einer externen Schnittstelle, des Spannbaum-Nebenknotens umfassen. Dabei können die Schnittstellen-Zustands-Nachrichten sowie der Spannbaum-Hauptknoten wiederum gemäß der vorliegenden Beschreibung ausgebildet sein. Auch diese Ausgestaltung ermöglicht die Umsetzung der vom Spannbaum-Hauptknoten ermittelten Konfiguration des zweiten Teilnetzes bezüglich des Spannbaum-Protokolls.

Weiterhin kann die Spannbaum-Unterstützungs-Funktionalität auch die Übermittlung einer über die externe Schnittstelle des Spannbaum-Nebenknotens empfangenen, dem Spannbaum-Protokoll zugeordneten Protokolldaten-Nachricht und/oder das Empfangen und Verarbeiten einer Protokolldaten-Nachricht oder einer Antwort-Protokolldaten-Nachricht des Spannbaum-Hauptknotens insbesondere als Reaktion auf eine gesendete Protokolldaten-Nachricht umfassen. Dabei können die Protokolldaten-Nachricht sowie die Antwort-Prokolldaten-Nachricht gemäß der vorliegenden Beschreibung ausgebildet und ausgestaltet sein. Solche Protokolldaten-Nachrichten können beispielsweise zum Netzwerkmanagement eines von dem Spannbaum-Protokoll gesteuerten Kommunikationsnetzes vorgegeben sein. Mittels solcher Protokolldaten-Nachrichten und den entsprechenden Antwort-Protokolldaten-Nachrichten können beispielsweise die Kommunikationswege bestimmt und mögliche Transportschleifen ermittelt werden sowie auch das Anpassen von Schnittstellen der einzelnen Netzknoten beispielsweise zur Vermeidung solcher Transportschleifen. Ein Spannbaum-Nebenknoten kann dann beispielsweise eine über eine externe Schnittstelle empfangene Protokolldaten-Nachricht an den Spannbaum-Hauptknoten weiterleiten, damit dieser diese weiter verarbeiten kann. Weiterhin kann der Spannbaum-Nebenknoten vom Spannbaum-Hauptknoten den Auftrag bekommen, über eine bestimmte externe Schnittstelle eine bestimmte Protokolldaten-Nachricht oder Antwort-Protokolldaten-Nachricht zu versenden oder eine entsprechende vom Spannbaum-Hauptknoten übermittelte Nachricht weiter zu leiten.

Der Spannbaum-Nebenknoten kann auch derart ausgebildet sein, dass er eine Information bezüglich eines einzustellenden Zustands an einer seiner Schnittstellen, insbesondere einer seiner externen Schnittstellen, umsetzt. Auf diese Weise können die Schnittstellen-Zustände, die beispielsweise gemäß der vorliegenden Beschreibung ausgebildet sein können, im Spannbaum-Nebenknoten umgesetzt werden.

Diese Ausgestaltung der Erfindung ermöglicht ein weiter verbessertes Netzwerkmanagement des Kommunikationsnetzes, da die ganze oder auch ein wesentlicher Teil der Komplexität, welcher im zweiten Teilnetz durch das Spannbaum-Protokoll des mit dem zweiten Teilnetz verbundenen ersten Teilnetzes erzeugt wird, im Spannbaum-Hauptknoten aufgefangen werden kann und die anderen Knoten nur eine entsprechende, im Allgemeinen deutlich weniger komplexe Unterstützungs-Funktionalität aufweisen müssen. Damit werden die negativen Eigenschaften des Spannbaum-Protokolls auf die positiven Eigenschaften des zweiten Teilnetzes, wie beispielsweise schnelle Rekonfigurationszeit oder Echtzeitfähigkeit, reduziert.

Die vorliegende Aufgabe wird ebenfalls gelöst von einem Kommunikations-Teilnetz, umfassend
- mindestens zwei Netzknoten und mindestens eine Schnittstelle zur Verbindung des Kommunikations-Teilnetzes mit einem vom Kommunikations-Teilnetz verschiedenen ersten Teilnetz,
- wobei das erste Teilnetz als ein erstes Teilnetz gemäß der vorliegenden Beschreibung ausgebildet ist und das Kommunikations-Teilnetz ein sich vom Spannbaum-Protokoll des ersten Teilnetzes unterscheidendes zweites Protokoll verwendet,
- wobei weiterhin das Kommunikations-Teilnetz derart ausgestaltet und eingerichtet ist, dass es vom Spannbaum-Protokoll des ersten Teilnetzes als ein virtueller Netzknoten behandelt wird oder behandelbar ist.

Dabei können die Netzwerkknoten, Schnittstellen sowie das Spannbaum-Protokoll und das zweite Protokoll gemäß der vorliegenden Beschreibung ausgestaltet sein.

Weiterhin kann vorgesehen sein, dass das Kommunikations-Teilnetz vom Spannbaum-Protokoll des ersten Teilnetzes als genau ein virtueller Netzknoten behandelt wird oder behandelbar ist.

Auch dieses Kommunikations-Teilnetz bietet den Vorteil, dass ein Kommunikationsnetz, umfassend das erste Teilnetz und das Kommunikations-Teilnetz, einfacher und schlanker steuerbar ist, da z.B. die Kommunikation im Kommunikations-Teilnetz durch das Spannbaum-Protokoll nicht wesentlich gestört wird.

Dabei kann das Kommunikations-Teilnetz beispielsweise entsprechend einem zweiten Teilnetz im Rahmen der vorliegenden Beschreibung ausgebildet und ausgestaltet sein.

Das Kommunikations-Teilnetz kann weiterhin derart ausgestaltet und eingerichtet sein, dass einer seiner Netzknoten als ein Spannbaum-Hauptknoten gemäß der vorliegenden Beschreibung und ein weiterer Netzknoten als ein Spannbaum-Nebenknoten gemäß der vorliegenden Beschreibung ausgebildet ist. Weiterhin kann das Kommunikations-Teilnetz auch derart ausgestaltet sein, dass einer seiner Netzknoten als ein Spannbaum-Hauptknoten gemäß der vorliegenden Beschreibung ausgestaltet ist und alle anderen Netzknoten des Kommunikations-Teilnetzes als Spannbaum-Nebenknoten gemäß der vorliegenden Beschreibung ausgestaltet sind.

Ein derart gestaltetes Kommunikations-Teilnetz ermöglicht einen besonders einfachen Umgang mit dem Spannbaum-Protokoll, da wesentliche Prozessschritte des Spannbaum-Protokolls vom Spannbaum-Hauptknoten gehandhabt werden, und andere Netzknoten des Kommunikations-Teilnetzes nur relativ wenig aufwändige Unterstützungsaufgaben des Spannbaum-Protokolls übernehmen müssen. Auf diese Weise werden einige beziehungsweise die meisten Netzknoten des Kommunikations-Teilnetzes von Tätigkeiten gemäß dem Spannbaum-Protokoll entlastet. So werden die Eigenschaften des Kommunikations-Teilnetzes, wie beispielsweise schnelle Rekonfigurationszeit oder Echtzeitfähigkeit, vom Spannbaum-Protokoll nur relativ wenig oder gar nicht beeinträchtigt.

Weiterhin kann das Kommunikations-Teilnetz auch einen Netzknoten umfassen, der als Spannbaum-Reserve-Hauptknoten gemäß der vorliegenden Beschreibung ausgebildet ist. Auf diese Weise kann die Eigenschaft des Kommunikations-Teilnetzes, als ein virtueller Netzknoten für das Spannbaum-Protokoll des ersten Teilnetzes zu erscheinen, bei Funktionsstörungen des Spannbaum-Hauptknotens erhalten werden, was die Fehlersicherheit und Ausfallsicherheit des Kommunikations-Teilnetzes weiter erhöht.

Das erste Teilnetz kann beispielsweise ein STP-, RSTP- und/oder MSTP-Protokoll als Spannbaum-Protokoll verwenden, und das Kommunikations-Teilnetz kann weiterhin derart ausgestaltet sein, dass es vom Spannbaum-Protokoll des ersten Teilnetzes als ein Zentralknoten für das erste Teilnetz behandelt wird. Dabei kann der Zentralknoten beispielsweise gemäß der vorliegenden Beschreibung ausgestaltet sein. Insbesondere kann der Zentralknoten als so genannte "Root-Bridge" des STP-, RSTP- und/oder MSTP-Protokolls ausgestaltet sein, wobei die genannten Protokolle beispielsweise gemäß den in der vorliegenden Beschreibung genannten IEEE Standards und auch der Zentralknoten/"Root-Bridge" gemäß dem entsprechenden Standard oder einem vergleichbarem Standard ausgebildet sein.

Für den Fall, bei welchem das Kommunikations-Teilnetz einen Spannbaum-Hauptknoten sowie einen Spannbaum-Reserve-Hauptknoten umfasst, kann das Kommunikations-Teilnetz weiterhin derart ausgebildet sein, dass im Normalzustand die Spannbaum-Funktionalität des Spannbaum-Hauptknotens die Funktionalität als Zentralknoten für das erste Teilnetz ausübt und im Fehler-Zustand die Spannbaum-Funktionalität des Spannbaum-Reserve-Hauptknotens die Ausführung der Funktionalität des Zentralknotens für das Spannbaum-Protokoll des ersten Teilnetzes übernimmt. Dabei kann der Zentralknoten wiederum wie in der vorliegenden Beschreibung, beispielsweise als so genannte "Root-Bridge", ausgestaltet sein.

Eine besonders vorteilhafte Ausgestaltung ergibt sich, wenn das Kommunikations-Teilnetz als Ringstruktur ausgebildet ist. Auf diese Weise kann beim Ausfall nicht nur einer internen Funktionalität des Spannbaum-Hauptknotens, sondern auch einer Schnittstelle des Spannbaum-Hauptknotens oder auch einer fehlerhaften oder unterbrochenen Leitung zwischen zwei Knoten im Kommunikations-Teilnetz oder zwischen dem Kommunikations-Teilnetz und dem ersten Teilnetz in vielen Fällen der Spannbaum-Reserve-Hauptknoten die Funktion als Zentralknoten für das Spannbaum-Protokoll übernehmen. Das Kommunikations-Teilnetz bildet somit quasi einen virtuellen Zentralknoten für das Spannbaum-Protokoll des ersten Teilnetzes mit einer internen Redundanz bezüglich der Funktionalität als Zentralknoten. Im Zusammenhang mit einem STP-, RSTP- und/oder MSTP-Protokoll als Spannbaum-Protokoll könnte das zweite Kommunikations-Teilnetz in der vorstehend genannten Ausgestaltung beispielsweise als "redundante Root-Bridge" gesehen werden.

Die Übernahme der Funktionalität als Zentralknoten durch den Spannbaum-Reserve-Hauptknoten vom Spannbaum-Hauptknoten kann beispielsweise derart erfolgen, dass der Spannbaum-Reserve-Hauptknoten auch die Identifikationsdaten des Spannbaum-Hauptknotens innerhalb des Spannbaum-Protokolls mit übernimmt. Auf diese Weise wäre die Übernahme der Funktionalität als Zentralknoten durch den Spannbaum-Reserve-Hauptknoten im Spannbaum-Protokoll des ersten Teilnetzes nicht erkennbar, da für das Spannbaum-Protokoll das gemäß der vorstehenden Erläuterung ausgestaltete Kommunikations-Teilnetz weiterhin als ein- und denselben virtuellen Zentralknoten erscheinen würde. Weiterhin kann aber auch der Spannbaum-Reserve-Hauptknoten auch nach der Übernahme der Funktionalität als Zentralknoten für das Spannbaum-Protokoll seine ursprünglichen Kenndaten, z.B. innerhalb des Spannbaum-Protokolls, behalten.

Die vorstehende Aufgabe wird ebenfalls gelöst von einem Kommunikationsnetzwerk, umfassend ein erstes Teilnetz gemäß der vorliegenden Beschreibung sowie ein zweites Teilnetz oder/und ein Kommunikations-Teilnetz gemäß der vorliegenden Beschreibung. Ein derart ausgestaltetes Kommunikationsnetzwerk lässt sich einfacher steuern, da das zweite Teilnetz beziehungsweise das Kommunikations-Teilnetz vom Spannbaum-Protokoll des ersten Teilnetzes als ein virtueller Netzknoten gesehen wird.

Weitere vorteilhafte Ausgestaltungen finden sich in den Unteransprüchen.

Im Folgenden wird die Erfindung beispielhaft mit Bezug auf die beiliegenden Figuren näher erläutert.

Es zeigen
Figur 1 Kommunikationsnetzwerk bestehend aus einem Office-Netz und einem Industrie-Netz;
Figur 2 Variante des in Figur 1 dargestellten Kommunikationsnetzes mit einem Reserve-Hauptknoten im Industrie-Netz.

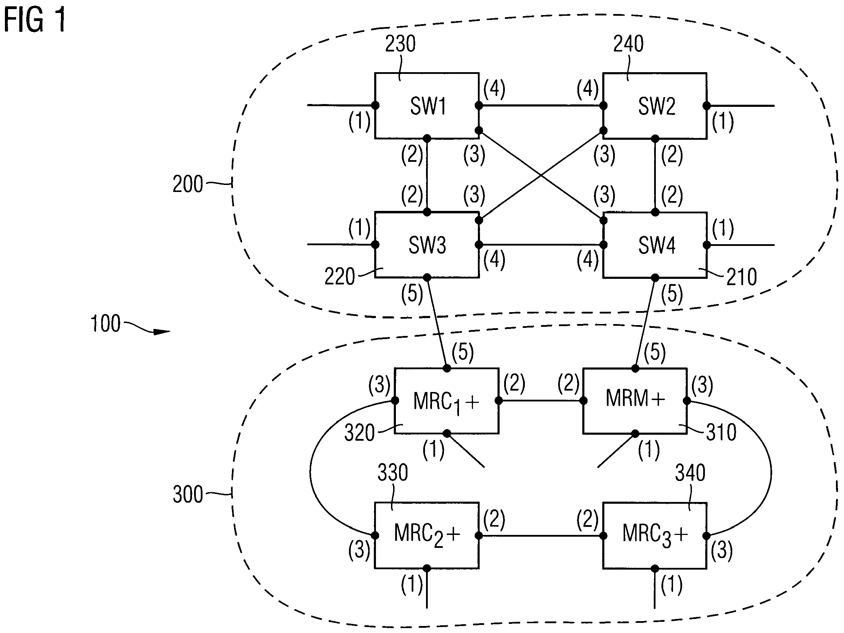

Figur 1 zeigt ein Kommunikationsnetzwerk 100, welches ein erstes, als Office-Netzwerk ausgebildetes Teilnetz 200 und ein als Industrienetz ausgebildetes zweites Teilnetz 300 aufweist.

Das Office-Netz 200 umfasst vier Netzknoten ("Switches") 210, 220, 230, 240, die in Figur 1 mit SW1 bis SW4 gekennzeichnet sind. Jeder dieser Switches 210, 220, 230, 240 umfasst mehrere Schnittstellen ("Ports"), die in Figur 1 bei jedem der Switches 210, 220, 230, 240 durchnummeriert sind. Damit ist jeder Port eines Switches 210, 220, 230, 240 durch die Angabe des Switches und die Nummer des Ports eindeutig zuordenbar und definiert. Die vier Switches 210, 220, 230, 240 sind über Netzwerkleitungen zwischen ihren Ports zu dem Office-Netz 200 verknüpft, welches ein Beispiel für ein erstes Teilnetz im Sinne der vorliegenden Beschreibung ist. Jeder der Switches SW1 bis SW4 weist eine externe Schnittstelle auf, welche bei jedem der Switches SW1 bis SW4 mit der Nummer (1) gekennzeichnet ist. Über diese externen Schnittstellen können beispielsweise Telekommunikationsendgeräte wie Computer, Telefone, Automatisierungsmodems oder auch weitere Kommunikations-Netzwerke mit einem jeweiligen Switch verbunden sein.

Auch die mit der laufenden Nummer (5) bezeichneten Ports der Switches SW3 220 und SW4 210 des Office-Netzes 200 sind externe Schnittstellen des Office-Netzes 200, über welche entsprechend die Verbindung zum Industrienetz 300 hergestellt ist.

Auf dem ersten Teilnetz 200 ist ein STP- oder RSTP-Protokoll installiert, mit welchem sich beispielsweise Transportschleifen oder redundante Kommunikationswege vermeiden lassen. So gibt es beispielsweise für eine vom Switch SW2 240 an den Switch SW3 220 gesendete Nachricht verschiedene Übertragungswege, von welchem im Rahmen des STP- oder RSTP-Protokolls nur einer ausgewählt wird und die anderen durch Setzen der Zustände der einzelnen Ports der verschiedenen Switche stillgelegt werden. Bei einer Änderung im Netz, beispielsweise durch Ausfall einer Leitung oder einer Schnittstelle, werden diese Port-Zustände gemäß dem STP- oder RSTP-Protokoll dann so angepasst, dass wiederum eindeutige und insbesondere schleifenfreie Kommunikationswege innerhalb des Netzes vorliegen.

In Figur 1 kann beispielsweise der Switch SW1 230 die Funktion der "Root-Bridge" für das STP- beziehungsweise RSTP-Protokoll übernehmen. Bei dieser laufen die Informationen bezüglich der Netzstruktur sowohl des ersten Teilnetzes 200, als auch eines Industrienetzes 300, soweit auch dort das STP-RSTP-Protokoll implementiert ist, zusammen und diese übernimmt auch die entsprechende Steuerung des Netzes.

Das Industrienetz 300 weist ebenfalls vier Switche 310, 320, 330, 340 auf, die zu einer Ringstruktur verbunden sind. Dabei erfolgt die Bildung des Rings über eine Verbindung der jeweils mit "2" und "3" gekennzeichneten Ports der Switche 310, 320, 330, 340 des Industrienetzes 300.

Zur Verbesserung der Redundanzeigenschaften des Industrienetzes ist im Industrienetz das so genannte "Media Redundancy Protocol" (MRP) installiert, durch welches auch beim Ausfall einer der Ring-Leitungen die Kommunikation innerhalb des Industrienetzes 300 gewährleistet bleibt. Dabei wird das Management dieses Protokolls vom Knoten 310 des Industrienetzes 300 übernommen, der daher in Figur 1 als MRM: "Media Redundancy Manager" bezeichnet ist. Die anderen Netzwerkknoten 320, 330, 340 des Industrienetzes 300 weisen eine Funktionalität zur Unterstützung dieses Protokolls auf und sind daher in Figur 1 als "Media Redundancy Client" (MRC) bezeichnet.

Weiterhin weisen die Switches 310, 320, 330, 340 des Industrienetzes 300 auch externe Schnittstellen auf, welche jeweils mit der Nummer "1" bezeichnet sind. Zusätzlich sind auch die mit der Nummer (5) bezeichneten Ports der Switches 310 und 320 externe Schnittstellen des Industrienetzes 300, wobei über diese Schnittstellen die Verbindung zum Office-Netz 200 erfolgt.

Weiterhin sind die Switches 310, 320, 330, 340 des Industrienetzes 300 auch in das STP- beziehungsweise RSTP-Protokoll des Office-Netzes integriert.

Dabei ist der MRM 310 im Industrienetz 300 so ausgestaltet, dass durch ihn das Industrienetz 300 vom STP- beziehungsweise RSTP-Protokoll des Office-Netzes 200 als ein virtueller Netzknoten betrachtet wird. Diese zusätzliche Funktionalität wird durch das "+" beim MRM in Figur 1 symbolisiert. Durch diese koordinierende Funktionalität des MRM+ erscheint das Industrienetz 300 im Rahmen des RSTP- oder STP-Protokolls als ein virtueller Netzknoten mit den mit der laufenden Ziffer (1) und (5) bezeichneten externen Schnittstellen als externen Schnittstellen des virtuellen Netzknotens. Die innere Struktur des Industrienetzes 300 spielt im Rahmen des RSTP- oder STP-Protokolls keine oder nur eine geringe Rolle, da diese Kenntnis und die entsprechende Informationsverteilung und Weiterleitung vom MRM+ 310 innerhalb des Industrienetzes 300 übernommen wird.

Die MRC-Knoten 320, 330, 340 im Industrienetz unterstützen diese koordinierende Funktion des MRM+ im Rahmen des RSTP- oder STP-Protokolls, indem sie entsprechende Informations-, Abfrage- oder Anweisungs-Nachrichten vom MRM+ erfassen, verstehen und beantworten können. Diese Eigenschaft der MRC-Knoten 320, 330, 340 ist durch ein zusätzliches "+" in der Bezeichnung in Figur 1 symbolisiert.

So kann beispielsweise beim Hochfahren des Industrienetzes 300 der MRM+ 310 Abfragenachrichten an alle MRC-Knoten 320, 330, 340 verschicken, mit der Aufforderung, die jeweiligen externen Schnittstellen und unter Umständen auch internen Schnittstellen, dem MRM+ zurückzumelden. Dann kann der MRM+ 310 beispielsweise den einzelnen externen Schnittstellen im Industrienetz 300 eindeutige Port-Identifikationsdaten zuordnen, so dass jede externe Schnittstelle im Industrienetz 300 vom STP- beziehungsweise RSTP-Protokoll eindeutig angesprochen werden kann. Diese Port-Identifikationsdaten werden dann wieder an die einzelnen MRC-Knoten 320, 330, 340 versendet, so dass jeder Switch 310, 320, 330, 340 im Industrienetz 300 über die Identifikationsdaten seiner Ports Bescheid weiß. Weiterhin liegt im MRM+ 310 die vollständige Information darüber vor, welche der Ports sich an welchem der Switches 310, 320, 330, 340 befinden.

Diese Konfiguration hat den Vorteil, dass die sehr schnelle Rekonfigurationszeit des MRP-Protokolls im Industrienetz 300 bei Störungen im Industrienetz 300 durch das RSTP- oder STP-Protokoll nicht beeinträchtigt wird, da der innere Aufbau des Industrienetzes 300 für das STP- oder RSTP-Protokoll des Office-Netzes 200 nicht sichtbar ist. Eine Rekonfiguration im Industrienetz 300 durch den MRM+ 310 beeinflusst die Kommunikationswege innerhalb des Industrienetzes 300, aber nicht dessen externe Schnittstellen und somit dessen Erscheinung für das STP- oder RSTP-Protokoll.

Gemäß dem Stand der Technik musste bisher auch in jedem der Netzwerkknoten 310, 320, 330, 340 des Industrienetzes das STP- oder RSTP-Protokoll implementiert sein, um das Office-Netz 200 mit dem Industrienetz 300 koppeln zu können. Dann ergibt sich allerdings auch bei jeder Leitungsstörung oder ähnlichen Fehlern im Industrienetz 300, dass das komplette Kommunikationsnetz 100, bestehend aus dem Office-Netz 200 und dem Industrienetz 300, komplett vom STP- oder RSTP-Protokoll rekonfiguriert werden muss, was teilweise beträchtliche Zeit dauern kann und in dieser Zeit das Industrienetz 300 beeinträchtigt oder auch lahmlegt. Insbesondere in dem Fall, in welchem das Industrienetz 300 in der Automatisierung oder Steuerung eingesetzt wird, sind solche Ausfallzeiten häufig nicht tolerierbar.

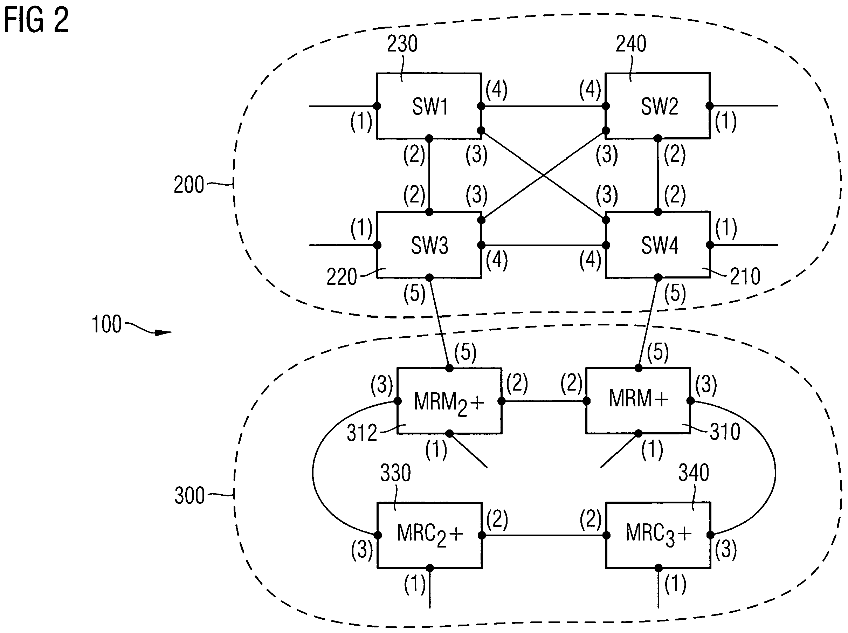

In Figur 2 ist das in Figur 1 dargestellte Kommunikationssystem 100 in leicht abgewandelter Form dargestellt. Dabei wurde der im MRC-Client MRC₁+ 320 durch einen "Reserve-Master" MRM₂+ 312 ersetzt. Alle anderen Netzwerkkomponenten des Kommunikationsnetzes 100 entsprechen in Bezeichnung und Ausführung denjenigen in Figur 1 dargestellten. Der Reserve-Master 312 des Industrienetzes 300 hat dabei die Aufgabe, die Funktionalität des MRM+ 310 zu übernehmen, wenn bei diesem eine Funktionsstörung auftritt. Eine solche Funktionsstörung kann beispielsweise ein vollständiger Ausfall des MRM+ oder auch ein Fehler im Programmablauf oder bei dessen Schnittstellen umfassen. Der MRM₂+ 312 ist dabei derart ausgestaltet, dass er sowohl die Rolle des MRP-Masters vom MRM+ 310, als auch die Rolle als Spannbaum-Hauptknoten für das Industrienetz 300 vom MRM+ übernehmen kann. Weiterhin ist es auch möglich, dass der MRM₂+ nur eine der beiden Funktionalitäten übernimmt, z.B. in dem Fall, wenn die Funktionsstörung des MRM+ nur eine der beiden Funktionalitäten betrifft.

Zur Vorbereitung einer solchen Übernahme übermittelt der MRM+ mindestens immer dann die Informationen über die Netzwerkkonfiguration des Industrienetzes 300, die entsprechenden Portstates und/oder die Port-Identifikationsdaten der Netzwerkknoten 310, 320, 330, 340 der Switches im Kommunikationsnetz 300, wenn sich an diesen Informationen etwas ändert bzw. geändert hat. Auf diese Weise liegen im MRM₂₊ immer die aktuellsten Informationen über den Zustand des Industrienetzes 300 vor, so dass dieser jederzeit die oben genannte Tätigkeit vom MRM+ übernehmen kann.

Die Übernahme der vorstehend genannten Aufgabe vom MRM+ durch den MRM₂+ kann beispielsweise erfolgen, wenn der MRM₂+ über einen vorbestimmten Zeitraum keine Nachrichten vom MRM+ empfängt und daher von dessen Ausfall ausgehen kann. Weiterhin kann die Übernahme dieser Aufgaben auch erfolgen, wenn der MRM₂+ eine entsprechende Nachricht oder Information, beispielsweise vom MRM+ oder auch einem anderen Netzknoten, erhält.

Für den Fall, dass der MRM+ 310 derart ausgestaltet ist, dass durch ihn das Industrienetz 300 als eine virtuelle "Root-Bridge" für das STP- beziehungsweise RSTP-Protokoll des Office-Netzes 200 agiert, kann der MRM₂+ auch diese Funktionalität vom MRM+ übernehmen. Dabei kann diese Übernahme beispielsweise so ausgestaltet sein, dass der MRM₂+ die Root-Bridge-Daten des MRM+ direkt übernimmt, inklusive der entsprechenden Identifikationsdaten. Auf diese Weise erscheint, trotz eines Ausfalls oder einer Störung des MRM+ das Industrienetz 300 als eine virtuelle, unveränderte Root-Bridge für das STP- oder RSTP-Protokoll des Office-Netzes 200.

Alternativ kann der MRM₂+ 312 andere Identifikationsdaten als die des MRM+ verwenden, z.B. seine vorherigen Identifikationsdaten behalten. Beim Ausfall des dann mit Root-Bridge-Funktionalität versehenen MRM+ zieht ein Ersetzen durch den MRM₂+ dann unter Umständen weitere Rekonfigurationsschritte des STP- oder RSTP-Protokolls des Office-Netzes 200 nach sich.

Nachfolgend folgt eine weitere beispielhafte Ausgestaltung der vorliegenden Erfindung, wobei es um die Kopplung eines ringförmigen Kommunikationsnetzwerks, auf welchem ein MRP-Protokoll (Media Redundancy Protocol) implementiert ist (im Folgenden MRP-Ring genannt) mit einem Ethernet-Netzwerk, auf welchem das RSTP-Protokoll implementiert ist (im Folgenden RSTP-Netz genannt). Dabei kann das RSTP-Netz beispielsweise dem Office-Netz 200 in den Figuren 1 und 2 entsprechen, während der MRP-Ring beispielsweise dem Industrienetz 300 in den Figuren 1 und 2 entsprechen kann.

Weiterhin lassen sich die nachfolgenden Ausführungen bezüglich des MRP-Rings auf beliebige Ring- und/oder Liniennetzwerke ausdehnen, während sich die nachfolgenden Bemerkungen zum RSTP-Netz auf STP- und/oder MSTP-Netze sowie alle Kommunikationsnetze mit einem Spannbaum-Protokoll gemäß der vorliegenden Beschreibung ausdehnen lassen.

Der MRP-Ring ist ein Beispiel für ein zweites Teilnetz und/oder ein Kommunikations-Teilnetz gemäß der vorliegenden Beschreibung, während das RSTP-Netz ein Beispiel für ein erstes Teilnetz gemäß der vorliegenden Beschreibung ist.

Gemäß dem nachfolgenden Ausführungsbeispiel wird eine effiziente Kopplung von MRP-Ringen mit RSTP-Netzen durch die nachfolgenden Mechanismen erreicht.

Die MRP- und RSTP-Entscheidungen müssen koordiniert werden, um die Port States der Netzwerkknoten so zu berechnen, dass ein gültiges MRP- und RSTP-Netz geformt wird, z. B. eine Linientopologie für das MRP und eine Baumtopologie für das RSTP-Netz. Dabei ist eine Vorgehensweise, dass der gesamte MRP-Ring als ein einzelner virtueller RSTP-Netzknoten in einer Außenansicht erscheint. Daher sollten alle MRP-RingKnoten, die mit dem RSTP-Netz über externe Ports verbunden sind, BPDUs (Bridge Protocol Data Units) mit der gleichen Bridge-Identifikation senden. Externe Ports sind dabei Nicht-Ring-Ports im Beispiel einer Ring-Topologie. In einer Linien-Topologie werden auch Ring-Ports, die nicht mit anderen Ring-Ports verknüpft sind, als externe Ports behandelt. Weiterhin muss jedem der externen Ports eine eindeutige Port-ID im MRP-Netz zugeordnet werden, auch wenn die externen Ports an physikalisch unterschiedlichen Switches befindlich sind. Eine wie vorstehend beschriebene, vom MRP-Ring gebildete, virtuelle Bridge kann beispielsweise auch als Root-Bridge für das RSTP-Netz agieren.

Es gibt dabei verschiedene Ansätze, um das Verhalten des MRP-Rings als einzelne virtuelle RSTP-Bridge zu erreichen. In einer zentralisierten Strategie kann einer der Ringknoten verantwortlich dafür sein, BPDUs zu allen anderen RSTP-fähigen Netzknoten des MRP-Rings zu senden und alle BPDUs von diesen zu erhalten, wobei diese zentrale Bridge auch die Port States aller externer RSTP-Ports im MRP-Ring berechnet und innerhalb des Rings signalisiert. Diese zentrale Bridge im MRP-Ring ist ein Beispiel für einen Spannbaum-Hauptknoten im Sinne der vorliegenden Beschreibung.

In einem eher verteilten Ansatz erfolgt die Port State-Berechnung lokal auf allen RSTP-fähigen Knoten im MRP-Ring, wobei die entsprechenden Informationen zwischen diesen Knoten ausgetauscht werden, so dass jeder der Knoten denselben konsistenten Blick auf das gesamte Netz hat.

Im Weiteren soll besonders auf den zentralisierten Ansatz eingegangen werden, wobei das Gesamtkonzept nicht auf diesen Ansatz beschränkt ist.

Der Zentralknoten im MRP-Ring, der für die RSTP-Funktionalität des MRP-Rings als eine virtuelle Brücke verantwortlich ist, wird im Folgenden MRM+ genannt. Alle anderen Ringknoten, die zu externen Einheiten über externe Ports verbunden sind, leiten RSTP-BPDUs, die vom MRM+ kommen, nur weiter nach außen und anders herum. Die anderen Netzknoten im MRP-Ring werden MRC+ genannt, da diese die RSTP-Funktionalität des MRM+ unterstützen. Dabei ist der MRM+ ein Beispiel für den im Rahmen der Figuren 1 und 2 diskutierten MRM+ sowie für einen Spannbaum-Hauptknoten im Sinne der vorliegenden Beschreibung. Der MRC+ kann beispielsweise den MRC+ in den Figuren 1 und 2 entsprechen und ist weiterhin ein Beispiel für einen Spannbaum-Nebenknoten gemäß der vorliegenden Beschreibung.

Im MRP-Protokoll werden die BPDUs getunnelt (z. B. indem sie in herstellerspezifische MRP-Rahmen eingekapselt werden). Wenn die MRC+ RSTP-fähig sind, dann muss diese RSTP-Funktionalität abgeschaltet werden. Die einzige RSTP-Funktionalität, die im MRC+ ausgeführt wird, ist, gelernte Adressen in der "forwarding table" zu löschen, wenn dies wegen Port-State-Änderungen notwendig und vom MRM+ veranlasst wird.

Diese Lösung erlaubt es weiterhin, reine MRC-Knoten, die keine Erweiterungen zur Behandlung von RSTP-Funktionalitäten aufweisen, innerhalb des Rings zu verwenden. Allerdings dürfen solche Knoten nicht über externe Ports mit dem außen liegenden RSTP-Netz verbunden sein. Wenn dem so wäre, würden Konflikte zwischen MRP-Protokoll und RSTP-Protokoll auftreten. Allerdings sind die meisten der reinen MRC-Knoten, die im Automatisierungsumfeld verwendet werden, zwei Port-Knoten, welche durch einen solchen Nachteil nicht beeinträchtigt werden.

Jede Änderung im MRP-Ring, die im RSTP-Netz sichtbar ist, hat eine neue Berechnung des "Spanning-Trees" zur Folge. Beispiele dafür sind Änderungen der Identifikationsdaten von Netzknoten oder Schnittstellen von Netzknoten durch die Verbindung neuer Knoten oder Ringsegmente mit dem existierenden MRP-Ring oder auch Ausfälle im Ring, speziell auch ein Ausfall des MRM+. Da RSTP beträchtlich größere Rekonfigurationszeiten aufweist, als MRP (z. B. einige Sekunden bei RSTP im Vergleich zu einigen Zehntel oder Hundertstel Sekunden bei MRP) und da die Verbindungen zwischen dem RSTP-Knotenteil während der Rekonfiguration teilweise verloren gehen, werden durch die hier beschriebenen Ausgestaltungsmöglichkeiten Änderungen, die nach außen im RSTP-Netz sichtbar sind, nach Möglichkeit vermieden oder minimiert. Daher soll der MRP-Ring in einem stabilen Zustand sein, bevor er die Tätigkeit als ein virtueller RSTP-Netzknoten aufnimmt.

Da es bei veralteten RSTP-BPDUs eine relativ lange Zeit braucht, bis diese durch das RSTP-Protokoll erkannt und entfernt sind, sollten die MRC+ Netzknoten ihre externen Ports während des Startens des MRP-Rings im "Blocking"-Zustand halten. Das Aussenden von RSTP-BPDUs in dieser Phase würde eher zu störenden Informationen innerhalb des RSTP-Netzes führen und dessen Start-Up oder Rekonfiguration unnötig verkomplizieren und verlängern.

Bevor der MRP-Ring seine Funktionalität als virtueller Knoten aufnimmt, muss er sich selbst konfigurieren. Dazu wird ein einzelner Netzknoten innerhalb des Rings als MRM+ ausgewählt und alle anderen Netzknoten im Ring werden als MRC+ oder auch gewöhnliche MRC-Knoten gesetzt. Wie vorstehend beschrieben, berechnet der MRM+ die "RSTP State Machine". Dazu benötigt er Informationen über die MRC+ Netzwerkknoten, die im MRP-Ring installiert sind und deren Eigenschaften wie ihre Adressen, lokale Port-Indizes, lokale Port-Prioritäten und die Port-Pfadkosten der externen Ports. Zusätzlich zu diesen lokalen MRC+ Port-Informationen kann der MRM+ auch noch Nachbarschaftsinformationen bezüglich der Ringports aller MRC+ Knoten im Ring sammeln. Dazu sendet der MRM+ eine entsprechende Anforderung an alle MRC+ Netzknoten und diese senden eine entsprechende Antwortnachricht zurück. Danach berechnet der MRM+ eindeutige Port-IDs, bestehend aus einer Priorität und einem Index für jeden Port jedes Netzknotens. Um den MRP-Ring als virtuelle Bridge zu initialisieren, wird diese Information vom MRM+ an jeden MRC+ mit externen Schnittstellen gesendet.

Während des Betriebs werden dieselben Telegramme auch benützt, um entsprechende Änderungen der Port States zu erfassen oder bewirken. Weiterhin generiert der MRM+ BPDUs, welche zu den Ring-Netzknoten getunnelt werden, welche diese dann über die externen RSTP-Ports verschicken und andersherum. Topologieänderungen detektiert der MRM+ augrund von BPDU-Informationen und BPDU "Timeout Monitoring" wie in RSTP üblich. Die MRC+ erstellen und tunneln BPDUs an dem MRM+ im Falle von Verbindungsänderungen an deren externen Schnittstellen.

Bei Verbindungsstörungen innerhalb des MRP-Rings öffnet der MRM+ seinen blockierten Port, worauf der MRP-Ring im schlechtesten Fall nach z.B. einigen Zehntel oder Hundertstel Sekunden wieder voll funktionsbereit ist. Da die standardmäßige Einstellung der "RSTP-Hellotime" zwei Sekunden ist und dabei zwei Wiederholungen erlaubt sind, verursacht eine solche Änderung im MRP-Ring keine Rekonfiguration im RSTP-Netz. Um auf einen Ausfall des MRM+ sinnvoll reagieren zu können, kann beispielsweise bereits im Vorgriff ein Ersatz MRM+ bestimmt werden. Dieser kann beispielsweise durch den aktiven MRM+ eingesetzt werden, wozu dieser Ersatz-MRM+ (auch MRM₂+) vom MRM+ alle notwendigen Informationen erhält, wie beispielsweise Bridge-ID, Port-IDs und MRM-Prioritäten aller MRM+-RingKnoten. Der aktive MRM+ informiert den Ersatz-MRM+ über seine Rolle als Ersatz-MRM+ und versorgt ihn immer mit den aktuellen RSTP-Informationen. Auf diese Weise ist es dem Ersatz-MRM jederzeit möglich, die Rolle als MRM+ übernehmen, ohne dass dies wesentlichen Konsequenzen auf das RSTP-Netz hat (außer für die Ports des ausgefallenen MRM+).

Für einen reibungslosen Übergang vom alten auf den neuen MRM+ kann der neue MRM+ anstatt seiner eigenen ursprünglichen Bridge-ID als RSTP-Netzknoten die existierende Bridge-ID des virtuellen RSTP-Knotens verwenden. Dieses MRM+ Redundanzkonzept hilft, einen der störendsten Nachteile von RSTP zu beseitigen oder zumindest zu verringern: Die vergleichsweise sehr lange Rekonfigurationszeit nach einem Ausfall der Root-Bridge. Im Falle, dass die vom MRP-Ring gebildete virtuelle Bridge als "Root-Bridge" gewählt wird, was leicht durch Zuordnung einer entsprechend kleinen Bridge-ID erreicht werden kann, lässt sich auf diese Weise eine redundante Root-Bridge erhalten.

Der Ersatz-MRM+ oder auch MRM₂+ gemäß des vorliegenden Beispiels ist ein Beispiel für einen MRM₂+, wie er in Zusammenhang mit den Figuren 1 und 2 beschrieben wurde und ist auch ein Beispiel für einen Spannbaum-Reserve-Hauptknoten gemäß der vorliegenden Beschreibung.

Im Folgenden folgt eine Erweiterung des vorstehend genannten Ausführungsbeispiels auf den Fall, dass ein ursprünglich fehlerhafter MRM+ -Netzknoten beim Auftreten des Fehlers seine Funktionalität an einen Ersatz-MRM+-Netzknoten übergeben hat und nach einer Reparatur wieder in den MRP-Ring eingebaut wird. Hierbei kann dann ein Problem auftreten, wenn der Ersatz-MRM+ die Bridge-ID des ursprünglichen MRM+ übernommen hat. Dann würden nach dem Einbau des reparierten MRM+ zwei Netzknoten mit derselben ID vorliegen.

Eine Vorgehensweise in diesem Fall kann sein, dass der reparierte MRM+ nach dem Einbau eine bestimmte Zeit wartet, bevor er seine RSTP-BPDUs aussendet. Während dieser Wartezeit erhält er RSTP-BPDUs von einem oder mehreren Nachbarknoten, aus welchen er auch die aktuelle ID der aktuellen Root-Bridge erkennen kann. Auf diese Weise erkennt der reparierte MRM+, dass seine ID bereits im Netz vorhanden ist und stoppt den automatischen "Start-Up"-Prozess. Danach kann ein entsprechender Diagnose- und Korrekturlauf erfolgen, um dieses Problem zu beseitigen.

Eine weitere Alternative zum Umgang mit diesem Problem ist, dass vorgesehen ist, im Fehlerfall die IDs vom MRM+ und dem Ersatz-MRM+ auszutauschen. Dazu kennen sowohl der MRM+ als auch der Ersatz-MRM+ immer beide die IDs. Beim Ausfall des aktiven MRM+ übernimmt dann der Ersatz-MRM+ die ursprüngliche ID des MRM+. Weiterhin ist der MRM+ so konfiguriert, dass er bei einem Neustart anhand dieser gespeicherten Daten erkennt, dass er mit der ID des ursprünglichen Ersatz MRM+ hochfahren muss. Auf diese Weise haben der MRM+ und der Ersatz-MRM+ ihre Rollen getauscht und es treten keine doppelten Bridge-IDs im Netz auf.

In einer weiteren Ausgestaltung der vorliegenden Erfindung kann auch das erste Teilnetz gemäß der vorliegenden Beschreibung eine Linienstruktur und/oder eine Ringstruktur aufweisen. Weiterhin kann in diesem Fall vorgesehen sein, dass das erste Teilnetz vom Spannbaum-Protokoll des zweiten Teilnetzes als ein virtueller Netzknoten behandelt wird oder behandelbar ist. In diesem Fall kann das erste Teilnetz auch die Merkmale eines zweiten Teilnetzes oder Kommunikations-Teilnetzes gemäß der vorliegenden Beschreibung aufweisen.

Gemäß dieser Ausgestaltung kann beispielsweise weiterhin sowohl das erste als auch das zweite Teilnetz eine Ringstruktur aufweisen, wobei jeder der Ringe für den jeweils anderen Ring als ein virtueller Netzknoten erscheint. In diesem Fall können zwei benachbarte Teilnetze mit einer Ringstruktur als zwei virtuelle Netzknoten agieren und die schnelle lokale RSTP-Umschaltung nutzen: Bei Ausfall des "Root-Ports" eines virtuellen Netzknotens kann auf einen zuvor vom Spannbaum-Protokoll berechneten "Alternate-Port" dieses virtuellen Netzknotens umgeschaltet werden, bei Ausfall eines "Designated Ports" auf einen entsprechenden "Backup Port". Dieser Fall ist besonders vorteilhaft in einer Konfiguration anwendbar, bei welcher benachbarte Ring-Netze über mindestens zwei redundante Verbindungen verknüpft sind. Dabei kann die Störung in einer der Verbindungen lokal durch den RSTP-Umschaltprozess gehandhabt werden, was zu einer schnellen Erholung oder Rekonfiguration der gekoppelten Netzwerkringe führt.

Die vorliegende Erfindung beschreibt ein aus mehreren Teilnetzen zusammengesetztes Kommunikationsnetzwerk, wobei in mindestens einem der Netzwerke ein Spannbaum-Protokoll zur Vermeidung von Transportschleifen und redundanten Pfaden implementiert ist und wobei mindestens eines der Teilnetze vom Spannbaum-Protokoll als ein virtueller Netzknoten behandelt wird und behandelbar ist. Auf diese Weise lassen sich Rekonfigurationen gemäß Spannbaum-Protokoll und innerhalb eines als virtueller Netzknoten erscheinenden Teilnetzes entkoppeln, bzw. im Wesentlichen entkoppeln, und so beispielsweise Rekonfigurationen beschleunigen und erleichtern.

## Patentansprüche

1. Netzwerkknoten (310, 312, MRM+) für ein Kommunikationsnetzwerk (100), das ein erstes Teilnetz (200), das ein Spannbaum-Protokoll verwendet, und ein mit dem ersten Teilnetz (200) verbundenes zweites Teilnetz (300) umfasst, das ein sich vom Protokoll des ersten Teilnetzes (200) unterscheidendes zweites Protokoll verwendet,
- wobei der Netzwerkknoten (310, 312) als ein Element für das zweite Teilnetz (300) eingerichtet und zur Kommunikation innerhalb des zweiten Teilnetzes (300) ausgebildet ist,
- wobei das zweite Teilnetz (300) mindestens eine externe Schnittstelle aufweist und externe Schnittstellen des zweiten Teilnetzes (300) solche Schnittstellen von Netzknoten des zweiten Teilnetzes sind, die nicht mit einem Netzknoten des zweiten Teilnetzes (300) verbunden sind,
- wobei der Netzwerkknoten (310, 312) vermittels einer Spannbaum-Funktionalität derart als ein Spannbaum-Hauptknoten (310, 312) zur Kontrolle und Steuerung des zweiten Teilnetzes (300) ausgebildet und eingerichtet ist, dass das zweite Teilnetz (300) vom Spannbaum-Protokoll des ersten Teilnetzes (200) als ein virtueller Netzknoten behandelt wird,
**dadurch gekennzeichnet, dass** die Spannbaum-Funktionalität des Spannbaum-Hauptknotens (310, 312) umfasst:
- Vergabe von eindeutigen Schnittstellen-Identifikationsdaten für externe Schnittstellen des zweiten Teilnetzes (300) und
- Übermittlung von diesen Schnittstellen-Identifikationsdaten an andere Netzwerkknoten des zweiten Teilnetzes (300).

2. Netzwerkknoten nach Anspruch 1,
**dadurch gekennzeichnet, dass** das Spannbaum-Protokoll als STP-, RSTP- und/oder MSTP-Protokoll ausgebildet ist und die Spannbaum-Funktionalität eine STP-, RSTP- und/oder MSTP-Funktionalität umfasst.

3. Netzwerkknoten nach Anspruch 1 oder 2,
**dadurch gekennzeichnet, dass** das zweite Teilnetz (300) eine Linienstruktur und/oder Ringstruktur aufweist.

4. Netzwerkknoten nach einem der Ansprüche 1 bis 3,
**dadurch gekennzeichnet, dass** das zweite Teilnetz (300) ein echtzeitfähiges Protokoll verwendet, welches insbesondere weiterhin ein HiPER-Ring-, HSR-, Turbo-Ring-, REP- und/oder MRP-Protokoll, verwendet.

5. Netzwerkknoten nach einem der Ansprüche 1 bis 4,
**dadurch gekennzeichnet, dass** die Spannbaum-Funktionalität des Spannbaum-Hauptknotens (310, 312) umfasst:
- Erfassung von externen Schnittstellen des zweiten Teilnetzes (300),
- Übertragung von Schnittstellen-Zuständen an andere Netzwerkknoten des zweiten Teilnetzes (300),
- Empfang von einer dem Spannbaum-Protokoll zugeordneten Protokolldaten-Nachricht insbesondere von einem weiteren Netzwerkknoten des zweiten Teilnetzes (300),
- Ermitteln einer Reaktion auf die empfangene Protokolldaten-Nachricht und/oder Übermitteln einer Antwort-Protokolldaten-Nachricht als Reaktion auf die empfangene Protokolldaten-Nachricht insbesondere an den weiteren Netzwerkknoten des zweiten Teilnetzes,
- die Funktionalität des Spannbaum-Hauptknotens (310, 312) als Zentralknoten für das erste Teilnetz (200) derart,
dass das zweite Teilnetz (300) durch die Spannbaum-Funktionalität des Spannbaum-Hauptknotens (310, 312) vom Spannbaum-Protokoll des ersten Teilnetzes (200) als Zentralknoten für das erste Teilnetz (200) behandelt wird oder behandelbar ist.

6. Netzwerkknoten nach einem der Ansprüche 1 bis 6,
**dadurch gekennzeichnet, dass** im zweiten Teilnetz (300) ein weiterer Netzknoten (312) mit Spannbaum-Funktionalität vorliegt, wobei der Spannbaum-Hauptknoten (310) derart ausgebildet und eingerichtet ist, dass er dem weiteren Netzknoten (312) die Funktion eines Spannbaum-Reserve-Hauptknotens (312) zuweist oder zuweisen kann.

7. Netzwerkknoten nach Anspruch 6,
**dadurch gekennzeichnet, dass** der Spannbaum-Hauptknoten (310) zur Ausübung der Spannbaum-Funktionalität des Spannbaum-Reserve-Hauptknotens (312) erforderliche Informationen übermittelt oder zur Übermittlung dieser Informationen ausgebildet ist.

8. Netzwerkknoten nach Anspruch 7,
**dadurch gekennzeichnet, dass** der Spannbaum-Hauptknoten (310) die zur Ausübung der Spannbaum-Funktionalität des Spannbaum-Reserve-Hauptknotens (312) erforderliche Informationen gemäß einer vorgegebenen oder vorgebbaren Regel übermittelt oder zur Übermittlung dieser Informationen gemäß einer vorgegebenen oder vorgebbaren Regel ausgebildet ist.

## Claims

1. Network node (310, 312, MRM+) for a communication network (100), which comprises a first subnetwork (200), which uses a spanning tree protocol, and a second subnetwork (300), which is connected to the first subnetwork (200) and uses a second protocol differing from the protocol of the first subnetwork (200),
- wherein the network node (310, 312) is configured as an element for the second subnetwork (300) and is embodied for communication within the second subnetwork (300),
- wherein the second subnetwork (300) has at least one external interface and external interfaces of the second subnetwork (300) are interfaces of network nodes of the second subnetwork which are not connected to a network node of the second subnetwork (300),
- wherein the network node (310, 312) is embodied and configured by means of a spanning tree functionality as a spanning tree master node (310, 312) for checking and controlling the second subnetwork (300) such that the second subnetwork (300) is handled by the spanning tree protocol of the first subnetwork (200) as a virtual network node,
**characterised in that** the spanning tree functionality of the spanning tree master node (310, 312) comprises:
- issuing of unique interface identification data for external interfaces of the second subnetwork (300), and
- transfer of said interface identification data to other network nodes of the second subnetwork (300).

2. Network node according to claim 1,
**characterised in that** the spanning tree protocol is embodied as an STP, RSTP and/or MSTP protocol and the spanning tree functionality includes an STP, RSTP and/or MSTP functionality.

3. Network node according to claim 1 or 2,
**characterised in that** the second subnetwork (300) has a linear structure and/or ring structure.

4. Network node according to one of claims 1 to 3,
**characterised in that** the second subnetwork (300) uses a realtime-capable protocol, which especially further uses a HiPER Ring, HSR, Turbo Ring, REP and/or MRP protocol.

5. Network node according to one of claims 1 to 4,
**characterised in that** the spanning tree functionality of the spanning tree master node (310, 312) includes:
- detection of external interfaces of the second subnetwork (300),
- transmission of interface states to other network nodes of the second subnetwork (300),
- receipt of a protocol data message assigned to the spanning tree protocol especially from a further network node of the second subnetwork (300)
- determining a reaction to the received protocol data message and/or transfer of a response protocol data message as a reaction to the received protocol data message especially to the further network nodes of the second subnetwork,
- the functionality of the spanning tree master node (310, 312) as central node for the first subnetwork (200) is such that the second subnetwork is handled or is able to be handled by the spanning tree functionality of the spanning tree master node (310, 312) by the spanning tree protocol of the first subnetwork (200) as central node for the first subnetwork (200).

6. Network node according to one of claims 1 to 6,
**characterised in that** a further network node (312) with spanning tree functionality is present in the second subnetwork (300), wherein the spanning tree master node (310) is embodied and configured such that it allocates or can allocate to the further network node (312) the function of a spanning tree reserve master node (312).

7. Network node according to claim 6,
**characterised in that** the spanning tree master node (310) transfers information required to exercise the spanning tree functionality of the spanning tree reserve master node (312) or is embodied for transferring this information.

8. Network node according to claim 7,
**characterised in that** the spanning tree master node (310), transfers the information required to exercise the spanning tree functionality of the spanning tree reserve master node (312) in accordance with a predetermined or predeterminable rule or is embodied for transferring this information in accordance with a predetermined or predeterminable rule.

## Revendications

1. Noeud (310, 312, MRM+) de réseau pour un réseau (100) de communication, qui comprend un premier sous-réseau (200) utilisant un protocole d'arbre couvrant et un deuxième sous-réseau (300), qui est relié au premier sous-réseau (200) et qui utilise un deuxième protocole, différent du protocole du premier sous-réseau (200),
- dans lequel le noeud (310, 312) de réseau est conçu sous la forme d'un élément pour le deuxième sous-réseau (300) et est constitué pour la communication à l'intérieur du deuxième sous-réseau (300),
- dans lequel le deuxième sous-réseau (300) a au moins une interface extérieure et des interfaces extérieures du deuxième sous-réseau (300) sont des interfaces de noeud du deuxième sous-réseau, qui ne sont pas reliées à un noeud du deuxième sous-réseau (300),
- dans lequel les noeuds (310, 312) du réseau sont, au moyen d'une fonctionnalité d'arbre couvrant sous la forme d'un noeud (310, 312) principal d'arbre couvrant, constitués et conçus pour le contrôle et la commande du deuxième sous-réseau (300), de manière à ce que le deuxième sous-réseau (300) soit traité sous la forme d'un noeud de réseau virtuel par le protocole d'arbre couvrant du premier sous-réseau (200),
**caractérisé en ce que** la fonctionnalité d'arbre couvrant du noeud (310, 312) principal d'arbre couvrant comprend:
- attribution de données d'identification d'interfaces univoques à des interfaces extérieures du deuxième sous-réseau (300) et
- transmission de ces données d'identification d'interface à d'autres noeuds du deuxième sous-réseau (300).

2. Noeud de réseau suivant la revendication 1,
**caractérisé en ce que** le protocole d'arbre couvrant est constitué sous la forme d'un protocole STP-, RSTP- et/ou MSTP et la fonctionnalité d'arbre couvrant comprend une fonctionnalité STP, RSTP et/ou MSTP.

3. Noeud de réseau suivant la revendication 1 ou 2,
**caractérisé en ce que** le deuxième sous-réseau (300) a une structure en ligne et/ou une structure en anneau.

4. Noeud de réseau suivant l'une des revendications 1 à 3,
**caractérisé en ce que** le deuxième sous-réseau (300) utilise un protocole apte au temps réel, qui utilise notamment en outre un protocole en anneau HiPER, un protocole HSR, un protocole en anneau Turbo, un protocole REP et/ou un protocole MRP.

5. Noeud de réseau suivant l'une des revendications 1 à 4,
**caractérisé en ce que** la fonctionnalité d'arbre couvrant du noeud (310, 312) principal d'arbre couvrant comprend:
- détection d'interfaces extérieures du deuxième sous-réseau (300),
- transmission d'états d'interface à d'autres noeuds du deuxième sous-réseau (300),
- réception d'un message de données de protocole associé au protocole d'arbre couvrant, notamment par un autre noeud du deuxième sous-réseau (300),
- détermination d'une réaction au message de données de protocole reçu et/ou transmission d'un message de données de protocole de réponse en réaction au message de données de protocole reçu, notamment aux autres noeuds du deuxième sous-réseau,
- la fonctionnalité du noeud (310, 312) principal d'arbre couvrant constituée sous la forme d'un noeud central pour le premier sous-réseau (200), de manière à ce que le deuxième sous-réseau (300) soit traité, par la fonctionnalité d'arbre couvrant du noeud (310, 312) principal d'arbre couvrant, par le protocole d'arbre couvrant du premier sous-réseau (200) comme noeud central pour le premier sous-réseau (200) ou puisse l'être.

6. Noeud de réseau suivant l'une des revendications 1 à 5,
**caractérisé en ce qu'**il y a, dans le deuxième sous-réseau (300), un autre noeud (312) de réseau ayant une fonctionnalité d'arbre couvrant, le noeud (310) principal d'arbre couvrant étant constitué et conçu de manière à ce qu'il affecte ou à ce qu'il puisse affecter la fonction d'un noeud (312) principal de réserve d'arbre couvrant à l'autre noeud (312) du réseau.

7. Noeud de réseau suivant la revendication 6,
**caractérisé en ce que** le noeud (310) principal d'arbre couvrant est constitué pour transmettre des informations nécessaires à l'exercice de la fonctionnalité d'arbre couvrant du noeud (312) principal de réserve d'arbre couvrant ou est constitué pour la transmission de ces informations.

8. Noeud de réseau suivant la revendication 7,
**caractérisé en ce que** le noeud (310) principal d'arbre couvrant transmet, suivant une règle donnée à l'avance ou pouvant l'être, les informations nécessaires à l'exercice de la fonctionnalité d'arbre couvrant du noeud (312) principal de réserve d'arbre couvrant ou est constitué pour la transmission de ces informations suivant une règle donnée à l'avance ou pouvant l'être.
